# EUROPÄISCHE PATENTSCHRIFT

(11) **EP 2 695 265 B1**
(45) Veröffentlichungstag und Bekanntmachung des Hinweises auf die Patenterteilung: **15.07.2015**
(21) Anmeldenummer: 12727277.1
(22) Anmeldetag: 30.03.2012
(51) Int. Cl.: H02H 3/33, H02H 3/16, H02J 7/04, B60L 3/00, B60L 3/04, B60L 11/18

(54) **LADEEINRICHTUNG FÜR EINE HOCHSPANNUNGSBATTERIE EINES KRAFTFAHRZEUGS, LADEANORDNUNG UND VERFAHREN ZUM BETRIEB EINER LADEANORDNUNG**
CHARGING DEVICE FOR A HIGH-VOLTAGE BATTERY OF A MOTOR VEHICLE, CHARGING ASSEMBLY AND METHOD FOR OPERATING A CHARGING ASSEMBLY
DISPOSITIF DE CHARGE POUR UNE BATTERIE HAUTE TENSION D'UN VÉHICULE AUTOMOBILE, SYSTÈME DE CHARGE ET PROCÉDÉ DE FONCTIONNEMENT D'UN SYSTÈME DE CHARGE

(30) Priorität: 08.04.2011 DE 102011016537
(43) Veröffentlichungstag der Anmeldung: 12.02.2014
(73) Patentinhaber: Audi AG, 85045 Ingolstadt (DE); Volkswagen AG, 38436 Wolfsburg (DE)
(72) Erfinder: THÖMMES, Marco, 85049 Ingolstadt (DE); FELKEL, Thomas, 85049 Ingolstadt (DE); ABL, Reiner, 82178 Puchheim (DE)
(74) Vertreter: Herbst, Matthias Heinz
(86) Internationale Anmeldenummer: PCT/EP2012/001416
(87) Internationale Veröffentlichungsnummer: WO 2012/136335

(56) Entgegenhaltungen:
- EP-A1- 0 349 880
- EP-A1- 2 236 345

## Beschreibung

Die Erfindung betrifft eine Ladeanordnung gemäß Anspruch 1.

Kraftfahrzeuge, die auch mittels elektrischer Energie betrieben werden können, sind bekannt, wobei sowohl Elektrokraftfahrzeuge, also solche, die ihre Antriebsenergie allein aus einem elektrischen Energiespeicher, insbesondere einer Hochspannungsbatterie, beziehen, als auch Hybridfahrzeuge, bei denen die Antriebsenergie neben der Hochspannungsbatterie auch aus anderen Energiequellen, insbesondere fossilen Energiequellen, gewonnen werden kann, bereits offenbart wurden.

Um die Hochspannungsbatterie eines derartigen Kraftfahrzeugs aufladen zu können, wurde vorgeschlagen, die Hochspannungsbatterie, insbesondere gemeinsam mit einer Niedrigspannungsbatterie, über ein übliches Wechselstromnetz, beispielsweise das Hausnetz des Betreibers des Kraftfahrzeugs, zu laden. Während die weiterhin vorgesehene Niedrigspannungsbatterie (auch als Bordnetzbatterie bezeichnet) üblicherweise eine Spannung von etwa 12 V aufweist, weist eine Hochspannungsbatterie eine höhere Spannung als die Niedrigspannungsbatterie auf, insbesondere eine oberhalb von 50 V liegende Spannung. Es sind auch Hochspannungsbatterien bekannt und im Einsatz, deren Batteriespannung zwischen 150 und 270 V liegt. Mithin ist eine spezielle Ladeanordnung erforderlich, um die Hochspannungsbatterie, bevorzugt die Hochspannungsbatterie und die Niedrigspannungsbatterie zu laden. Ein Ladegerät, im Folgenden als Ladeeinrichtung bezeichnet, kann dabei in das Kraftfahrzeug verbaut sein und einen Anschluss aufweisen, in den ein passender Stecker mit einem Ladekabel eingesteckt werden kann. Auf der anderen Seite wird das Ladekabel, insbesondere über eine Elektronikbox oder dergleichen, mit dem Wechselstromnetz verbunden, gegebenenfalls kann auch eine Ladesäule mit einem entsprechenden Ladekabel als Verbindung zu dem Wechselstromnetz vorgesehen sein.

Da hierbei mit hohen Spannungen und Strömen gearbeitet wird, ist es bekannt, einen Fehlerstromschutzschalter (FI-Schalter) als Schutz gegen elektrischen Schlag in der Ladeinfrastruktur, im Folgenden als Verbindungseinrichtung bezeichnet, vorzusehen. Dabei kann ein solcher Fehlerstromschutzschalter beispielsweise in der Ladesäule, einer Elektronikbox im Ladekabel oder im Stecker selber verbaut sein. Denkbar ist es auch, den FI-Schalter in oder benachbart einer Standardsteckdose des Wechselstromnetzes bereits vorzusehen. Aus Kosten- und Bauraumerwägungen ist es hierbei üblich, einen Fehlerstromschutzschalter vom Typ A (FI Typ A) zu verwenden. Es hat sich jedoch gezeigt, dass der Fehlerstromschutzschalter vom Typ A nicht alle Fehlerströme, die in der Ladeeinrichtung auftreten können, detektieren kann. Dabei handelt es sich um sogenannte Gleichfehlerströme, die allenfalls mit einem Fehlerstromschutzschalter vom Typ B detektiert werden könnten, der jedoch äußerst groß und kostenintensiv ist und daher üblicherweise eher selten verwendet wird.

Bei bekannten Ladegeräten bzw. Ladeeinrichtungen wird üblicherweise auch mit einem Kommunikationssignal gearbeitet, dass über eine spezielle Kommunikationsverbindung zwischen der Ladeeinrichtung und der Verbindungseinrichtung transportiert wird. Ein solches Kommunikationssignal wird auch als "Control Pilot" bezeichnet. Das Kommunikationssignal zeigt dabei beispielsweise an, dass eine Ladeeinrichtung angeschlossen ist, kann jedoch auch weitere Informationen transportieren, beispielsweise den Leistungsbedarf, Kennwerte der Hochspannungsbatterie und dergleichen. Das Kommunikationssignal wird von einer verbindungseinrichtungsseitigen Steuereinheit entsprechend verarbeitet. Es ist gängig, bei Fehlen dieses Kommunikationssignals die Stromzufuhr zu den ladeeinrichtungsseitigen Anschlüssen, insbesondere zu einem Stecker, der Verbindungseinrichtung zu unterbrechen, da keine angeschlossene Ladeeinrichtung angezeigt wird.

So eine Ladeeinrichtung ist aus EP 2236345 bekannt.

Der Erfindung liegt daher die Aufgabe zugrunde, eine Ladeeinrichtung dahingehend zu verbessern, dass eine erhöhte Sicherheit für eine Bedienperson bezüglich der von einem vorgesehenen Fehlerstromschutzschalter, insbesondere einem Fehlerstromschutzschalter vom Typ A, nicht detektierbaren Ströme besteht.

Zur Lösung dieser Aufgabe ist bei Ladeeinrichtung gemäß Anspruch 1 erfindungsgemäß vorgesehen, dass die Ladeeinrichtung (2) eine Fehlerstromdetektionseinrichtung zur Detektion eines Fehlerstroms der Fehlerstromart umfasst, welche Fehlerstromdetektionseinrichtung zur Übermittlung eines den Fehlerstrom anzeigenden Fehlerstromsignals an die verbindungseinrichtungsseitige Steuereinheit ausgebildet ist, welche zur Modifikation und/oder Unterbrechung des Kommunikationssignals in Abhängigkeit des Fehlerstromsignals derart ausgebildet ist, dass die Ladeeinrichtung von dem Wechselstromnetz getrennt wird.

Der Fehlerstromschutzschalter ist dabei insbesondere als ein Fehlerstromschutzschalter vom Typ A ausgebildet, so dass es sich entsprechend bei den nicht detektierten Fehlerströmen, also der wenigstens einen Fehlerstromart, um Gleichfehlerströme handelt. Solche Gleichfehlerströme treten insbesondere im Bereich von Komponenten auf, die der Gleichrichtung nachgeschaltet sind, die zum Laden der Hochspannungsbatterie und gegebenenfalls der Niedrigspannungsbatterie benötigt wird. Die der Erfindung zugrundeliegende Idee ist es nun, den Fehlerstrom innerhalb des Ladegeräts, also der Ladeeinrichtung, zu detektieren und bei einem vorliegenden Fehlerstrom Einfluss auf das Kommunikationssignal zu nehmen. Diese Veränderung oder bevorzugt Unterbrechung des Kommunikationssignals hat dann aufgrund der entsprechenden Ausbildung der Verbindungseinrichtung die Folge, dass die Ladeeinrichtung vom Hochstromnetz getrennt wird. Es resultiert dementsprechend eine Abschaltung des Systems, so dass die notwendige Sicherheit einer Ladeanordnung aufrechterhalten werden kann, ohne dass ein größerer und teurerer Fehlerstromschutzschalter, insbesondere ein Fehlerstromschutzschalter vom Typ B, benötigt würde. Insbesondere, wenn die Funktionalität der Abschaltung bei nicht vorhandenem Kommunikationssignal bereits in der Verbindungseinrichtung realisiert ist, wird eine bereits vorhandene Funktionalität vorteilhaft zur weiteren Erhöhung der Sicherheit mitverwendet.

In weiterer Ausgestaltung der vorliegenden Erfindung kann vorgesehen sein, dass die Fehlerstromdetektionseinrichtung als ein Residual Current Monitor (RCM) ausgebildet ist. Solche RCM sind grundsätzlich bekannt und überwachen den Differenzstrom in elektrischen Anlagen. Bei einem Überschreiten eines bestimmten Differenzstroms meldet der RCM, insbesondere über Meldekontakte, die Überschreitung dieses kritischen Wertes, so dass die Meldung dann verwendet werden kann, um durch entsprechende Ansteuerung der Komponente die Charakteristik eines detektierten Fehlerstroms geeignet zu verändern.

In diesem Zusammenhang ist es besonders vorteilhaft, wenn die Fehlerstromdetektionseinrichtung zur Detektion mehrerer, insbesondere aller Fehlerstromarten ausgebildet ist. So ist die Absicherung gegen Fehlerstromarten, die sowohl durch die Fehlerstromdetektionseinrichtung als auch durch den Fehlerstromschutzschalter detektiert werden, letztlich doppelt gegeben, so dass sich eine weitere Erhöhung der Sicherheit ergibt.

Es sei an dieser Stelle noch angemerkt, dass der Fehlerstromschutzschalter in verschiedenen Komponenten der Verbindungseinrichtung vorgesehen sein kann, insbesondere in einer Elektronikbox, einer Ladesäule, dem Stecker, oder gar als ein Teil der Infrastruktur eines Hauses selbst, beispielsweise verbaut in einer Standardsteckdose, vorgesehen werden kann.

In Weiterbildung der Erfindung kann vorgesehen sein, dass zur Trennung der Ladeeinrichtung (2) von dem Wechselstromnetz (5) die verbindungseinrichtungsseitige Steuereinheit zur Öffnung des Fehlerstromschutzschalters (8) bei einem nicht vorliegenden und/oder modifizierten Kommunikationssignal ausgebildet ist. Zweckmäßigerweise kann also eine ohnehin vorhandene Funktionalität genutzt werden, die insbesondere einen an die Ladeeinrichtung anzuschließenden Anteil, insbesondere einen Stecker, stromfrei schaltet, sobald kein Kommunikationssignal mehr vorliegt. Mithin wird eine bereits vorhandene Funktionalität zur Erhöhung der Sicherheit mitgenutzt. Es sei angemerkt, dass es aber auch denkbar ist, die Steuereinheit der Verbindungseinrichtung gezielt um eine solche Funktionalität zu erweitern, wenn diese nicht von Haus aus vorgesehen ist.

Schließlich betrifft die Erfindung noch ein Verfahren zum Betrieb einer erfindungsgemäßen Ladeanordnung, für eine Hochspannungsbatterie eines Kraftfahrzeugs, die mithin eine Ladeeinrichtung umfasst, die zweckmäßigerweise in einem Kraftfahrzeug selbst verbaut sein kann. Eine Verbindungseinrichtung erlaubt es, die Ladeeinrichtung zum Laden der Hochspannungsbatterie mit einem Wechselstromnetz zu verbinden, wobei die Verbindungseinrichtung einen Fehlerstromschutzschalter umfasst, der einen Fehlerstrom wenigstens einer Fehlerstromart, insbesondere einen Gleichfehlerstrom, nicht erfassen kann. Eine ladeeinrichtungsseitige Steuereinheit kann ein Kommunikationssignal über eine Kommunikationsverbindung an eine verbindungseinrichtungsseitige Kommunikationseinheit senden, wobei auch eine umgekehrte Kommunikation denkbar ist. Gemäß des erfindungsgemäßen Verfahrens ist nun vorgesehen, dass innerhalb der Ladeeinrichtung ein Fehlerstrom gemessen wird und bei Vorliegen eines durch den Fehlerstromschutzschalter nicht erfassbaren Fehlerstroms das Kommunikationssignal derart modifiziert oder unterbrochen wird, dass die Ladeeinrichtung (2) verbindungseinrichtungsseitig von dem Hochstromnetz (6) getrennt wird. Dabei kann beispielsweise der Fehlerstromschutzschalter geöffnet werden, es ist jedoch auch die Verwendung einer weiteren Schalteinrichtung denkbar, beispielsweise dann, wenn der Fehlerstromschutzschalter in einer Steckdose verbaut ist. Sämtliche Ausführungen bezüglich der erfindungsgemäßen Ladeeinrichtung und der erfindungsgemäßen Ladeanordnung lassen sich auch auf das erfindungsgemäße Verfahren übertragen.

Weitere Vorteile und Einzelheiten der vorliegenden Erfindung ergeben sich aus den im Folgenden dargestellten Ausführungsbeispielen sowie anhand der Zeichnung.

Dabei zeigt die einzige Figur eine Prinzipskizze einer erfindungsgemäßen Ladeanordnung.

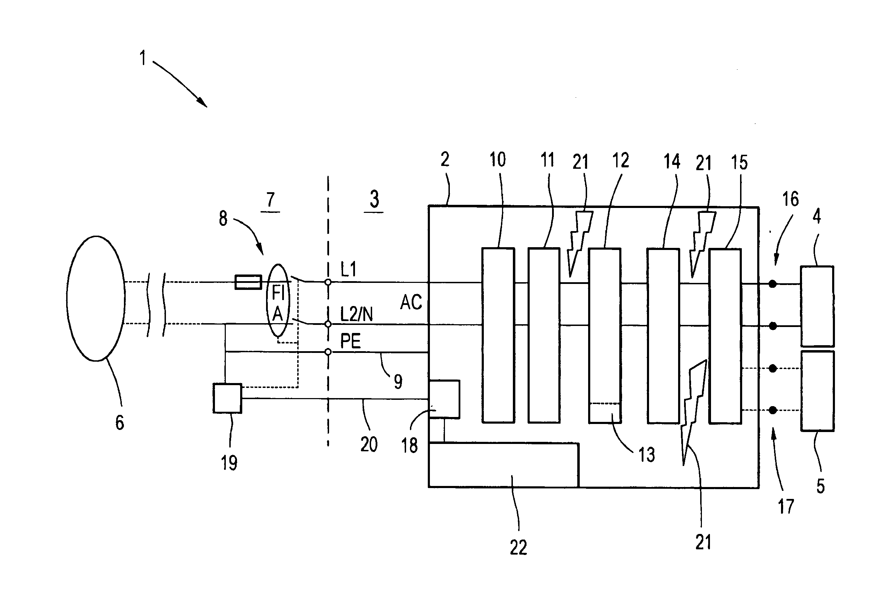

Fig. 1 zeigt eine Prinzipskizze einer erfindungsgemäßen Ladeanordnung 1. Sie besteht aus einer Ladeeinrichtung 2, die in einem nicht näher dargestellten Kraftfahrzeug 3 verbaut ist. Die Ladeeinrichtung 2 dient zum Laden einer in dem Kraftfahrzeug 3 vorgesehenen Hochspannungsbatterie 4, die im vorliegend dargestellten Beispielsfall eine Ladespannung im Bereich von 200 V benötigt. Das Kraftfahrzeug 3 umfasst ferner eine Niedrigspannungsbatterie 5 (Bordnetzbatterie), die ebenso über die Ladeanordnung 1 ladbar ist. Die Niedrigspannungsbatterie 5 arbeitet dabei mit einer Batteriespannung von 12 V, die Hochspannungsbatterie allgemein gesprochen mit einer höheren Batteriespannung.

Die Ladeeinrichtung 2 wird mit Wechselstrom aus einem üblichen Wechselstromnetz 6 betrieben, beispielsweise dem in Deutschland gängigen 220 V-Wechselstromnetz. Um das in dem Kraftfahrzeug 3 verbaute Ladegerät 2 mit dem Wechselstromnetz 6 verbinden zu können, ist eine Verbindungseinrichtung 7 vorgesehen, von der vorliegend nur schematisch die relevanten Komponenten gezeigt sind. Die Verbindungseinrichtung 7 kann ein Ladekabel umfassen, welches beidseitig mit Steckern versehen ist, wobei ein Stecker in einen entsprechenden, hier nicht näher dargestellten Anschluss der Ladeeinrichtung 2 einsteckbar ist, der andere Stecker beispielsweise in eine übliche Steckdose des Wechselstromnetzes 6. Um einen elektrischen Schlag bei einer Bedienperson zu vermeiden, umfasst die Verbindungseinrichtung einen Fehlerstromschutzschalter 8, der hier als ein Fehlerstromschutzschalter vom Typ A ausgebildet ist. Der Fehlerstromschutzschalter kann beispielsweise in einem Stecker der Verbindungseinrichtung 7, einer Elektronikbox der Verbindungseinrichtung 7, einer Ladesäule der Verbindungseinrichtung 7 oder dergleichen angeordnet sein, es ist jedoch auch möglich, ihn beispielsweise in oder benachbart einer zum Anschluss eines Ladekabels oder einer Ladesäule vorgesehenen Steckdose des Wechselstromnetzes 6 anzuordnen, welche dann für die Zwecke der vorliegenden Erfindung als Teil der Verbindungseinrichtung 7 verstanden wird.

Vorliegend wird ein einphasiges Laden dargestellt, wobei jedoch das Prinzip der vorliegenden Erfindung problemlos auf ein mehrphasiges Laden übertragbar ist. Es sei an dieser Stelle noch darauf hingewiesen, dass, wie bei derartigen Ladeanordnungen 1 üblich, selbstverständlich auch ein Schutzleiter 9 (PE) vorgesehen ist.

Die Ladeeinrichtung 2 umfasst wie üblich zunächst einen Eingangsfilter 10, dem ein Gleichrichter 11 nachgeschaltet ist. Dem Gleichrichter 11 folgt unmittelbar ein Leistungsfaktorkorrekturfilter 12 (PFC), welches hier als aktiver PFC mit einem taktenden Element 13 realisiert ist. Das Leistungsfaktorkorrektufilter 12 wird üblicherweise in Ladeeinrichtungen verwendet, da dann sichergestellt ist, dass eine sinusförmige Last aus der Infrastruktur entnommen wird.

Dem Leistungsfaktorkorrekturfilter 12 ist ein ZWK-Kondensator 14 (Zwischenkreis-Kondensator) nachgeschaltet. Diesem folgt wie üblich ein DC-DC-Wandler, der die an den Anschlüssen 16 und 17 benötigten Ladespannungen zur Verfügung stellt.

Sowohl die Ladeeinrichtung 2 als auch die Verbindungseinrichtung 7 umfassen ferner eine Steuereinheit 18, 19, die im angeschlossenen Zustand der Ladeeinrichtung 2 über eine Kommunikationsverbindung 20 miteinander realisieren können, die über entsprechende Leitungen und Kontakte in dem Stecker und dem Anschluss realisiert ist. Im normalen Betrieb sendet die Steuereinheit 18 der Ladeeinrichtung 2 dabei ein Kommunikationssignal, den sogenannten "Control Pilot", an die Steuereinheit 19 der Verbindungseinrichtung 7. Das Kommunikationssignal zeigt dabei zum einen an, dass eine Ladeeinrichtung 2 angeschlossen ist, kann aber zum anderen noch weitere Informationen, wie beispielsweise die Spezifikationen der Hochspannungsbatterie 4, transportieren.

Mit dem Fehlerstromschutzschalter 8 vom Typ A lassen sich Gleichfehlerströme innerhalb der Ladeeinrichtung 2, beispielsweise an den Positionen 21, nicht detektieren. Um eine erhöhte Sicherheit zu gewährleisten, umfasst die Ladeeinrichtung 2 daher eine Fehlerstromdetektionseinrichtung 22, die Gleichfehlerströme detektieren kann. Bei der Fehlerstromdetektionseinrichtung 22 handelt es sich vorliegend um einen Residual Current Monitor (RCM). Misst dieser einen Fehlerstrom, so wird ein entsprechendes Signal an die Steuereinheit 18 weitergeleitet, die in Reaktion das Kommunikationssignal unterbricht, wobei alternativ, aber weniger bevorzugt, auch eine Modifikation des Kommunikationssignals vorgesehen werden kann.

Nachdem nun die Steuereinheit 19 kein Kommunikationssignal mehr empfängt, nimmt sie an, dass keine (intakte) Ladeeinrichtung mehr angeschlossen ist, so dass sie automatisch sofort den Fehlerstromschutzschalter 8 ansteuert, zu öffnen. Im Ergebnis wird so eine Trennung der Ladeeinrichtung 2 vom Wechselstromnetz 6 ausgelöst, so dass durch den Gleichfehlerstrom kein elektrischer Schlag auftreten kann und die Sicherheit der Bedienperson sichergestellt ist.

Es sei an dieser Stelle noch angemerkt, dass die Fehlerstromdetektionseinrichtung 22 auch dazu ausgebildet sein kann, andere Fehlerstromarten, die grundsätzlich von dem Fehlerstromschutzschalter 8 detektiert werden können, auch zu erfassen. So wird bezüglich dieser Fehlerströme eine Art "doppelter" Schutz realisiert.

Ferner sei angemerkt, dass, insbesondere, falls das gewünschte Verhalten in der Verbindungseinrichtung 7 nicht ohnehin von Haus aus vorgesehen ist, diese selbstverständlich leicht modifiziert werden kann, um eine Trennung bei fehlendem oder modifiziertem Kommunikationssignal dennoch auszulösen. Insbesondere kann statt dem Fehlerstromschutzschalter 8 auch ein anderer Schalter verwendet werden.

## Patentansprüche

1. Ladeanordnung (1), aufweisend eine Ladeeinrichtung (2) für eine Hochspannungsbatterie (4) eines Kraftfahrzeuges (3), insbesondere eine in einem Kraftfahrzeug (3) verbaute Ladeeinrichtung (2), und eine Verbindungseinrichtung (7), wobei die Ladeeinrichtung (2) über die Verbindungseinrichtung (7) mit einem Wechselstromnetz (6) verbindbar ist, wobei die Verbindungseinrichtung (7) einen einen Fehlerstrom wenigstens einer Fehlerstromart, insbesondere einen Gleichfehlerstrom, nicht erfassenden Fehlerstromschutzschalter (8) umfasst, und wobei wenigstens eine bei Anschluss der Verbindungseinrichtung (7) an die Ladeeinrichtung (2) vorhandene Kommunikationsverbindung (20) zur Übertragung eines Kommunikationssignals zwischen einer ladeeinrichtungsseitigen Steuereinheit (18) und einer verbindungseinrichtungsseitigen Steuereinheit (19) vorgesehen ist,
**dadurch gekennzeichnet,**
**dass** die Ladeeinrichtung (2) eine Fehlerstromdetektionseinrichtung (22) zur Detektion eines Fehlerstroms der Fehlerstromart umfasst, wobei die Fehlerstromdetektionseinrichtung (22) zur Übermittlung eines den Fehlerstrom anzeigenden Fehlerstromsignals an die ladeeinrichtungsseitige Steuereinheit (18) ausgebildet ist, wobei die ladeeinrichtungsseitige Steuereinheit (18) zur Modifikation und/oder Unterbrechung des Kommunikationssignals in Abhängigkeit des Fehlerstromsignals derart ausgebildet ist, dass die Ladeeinrichtung (2) von dem Wechselstromnetz (6) getrennt wird, wobei zur Trennung der Ladeeinrichtung (2) von dem Wechselstromnetz (5) die verbindungseinrichtungsseitige Steuereinheit (19) zur Öffnung des Fehlerstromschutzschalters (8) bei einem nicht vorliegenden und/oder modifizierten Kommunikationssignal ausgebildet ist.

2. Ladeanordnung nach Anspruch 1, **dadurch gekennzeichnet, dass** die Fehlerstromdetektionseinrichtung (22) als ein Residual Current Monitor ausgebildet ist.

3. Ladeanordnung nach einem der vorangehenden Ansprüche, **dadurch gekennzeichnet, dass** die Fehlerstromdetektionseinrichtung (22) zur Detektion mehrerer Fehlerstromarten ausgebildet ist.

4. Verfahren zur Betrieb einer Ladeanordnung (1) nach einem der vorangehenden Ansprüche für eine Hochspannungsbatterie (4) eines Kraftfahrzeugs (3), **dadurch gekennzeichnet, dass** innerhalb der Ladeeinrichtung (2) ein Fehlerstrom gemessen wird und bei Vorliegen eines durch den Fehlerstromschutzschalter (8) nicht erfassbaren Fehlerstroms das Kommunikationssignal derart modifiziert oder unterbrochen wird, dass die Ladeeinrichtung (2) seitens der Verbindungseinrichtung (7) von dem Hochstromnetz (6) getrennt wird.

## Claims

1. A charging arrangement (1) having a charging device (2) for a high-voltage battery (4) of a motor vehicle (3), in particular a charging device (2) fitted in a motor vehicle (3), and a connecting device (7), wherein the charging device (2) is capable of being connected to an alternating-current mains (6) by way of the connecting device (7), wherein the connecting device (7) comprises a fault-current circuit breaker (8) not detecting a fault current of at least one type of fault current, in particular a direct-current fault current, and wherein at least one communication connection (20) present when the connecting device (7) is attached to the charging device (2) for transmitting a communication signal between a control unit (18) towards the charging unit and a control unit (19) towards the connecting device, **characterized in that** the charging device (2) comprises a fault-current detection device (22) for detecting a fault current of the type of fault current, wherein the fault-current detection device (22) is designed to transmit a fault-current signal indicating the fault current to the control unit (18) towards the charging unit, wherein the control unit (18) towards the charging unit is designed to modify and/or interrupt the communication signal in a manner dependent upon the fault-current signal in such a way that the charging device (2) is separated from the AC mains (6), wherein in order to separate the charging device (2) from the AC mains (6) the control unit (19) towards the connecting device is designed to open the fault-current circuit breaker (8) in the event of a non-existent and/or modified communication signal.

2. A charging arrangement (1) according to claim 1, **characterized in that** the fault-current detection device (22) is designed in the form of a residual current monitor.

3. A charging arrangement (1) according to one of the preceding claims, **characterized in that** the fault-current detection device (22) is designed to detect a multiplicity of types of fault current.

4. A method of operating a charging arrangement (1) according to any one of the preceding claims for a high-voltage battery (4) of a motor vehicle (3), **characterized in that** a fault current is measured inside the charging device (2) and, if a fault current not capable of being detected by the fault-current circuit breaker (8) is present, the communication signal is modified or interrupted in such a way that the charging device (2) is separated from the high-current mains (6) by the connecting device (7).

## Revendications

1. Système de charge (1), comportant un dispositif de charge (2) pour une batterie à haute tension (4) d'un véhicule automobile (3), notamment un dispositif de charge (2) monté dans un véhicule automobile (3), et un dispositif de liaison (7), le dispositif de charge (2) pouvant être relié à un réseau de courant alternatif (6) par l'intermédiaire du dispositif de liaison (7), le dispositif de liaison (7) comprenant un interrupteur différentiel (8) qui ne détecte pas un courant de défaut au moins d'un type de courant de défaut, notamment un courant de défaut continu, et au moins une liaison de communication (20) présente lors du raccordement du dispositif de liaison (7) au dispositif de charge (2) étant prévue pour la transmission d'un signal de communication entre une unité de commande (18) située du côté du dispositif de charge et une unité de commande (19) située du côté du dispositif de liaison,
**caractérisé en ce que** le dispositif de charge (2) comprend un dispositif de détection de courant de défaut (22) pour la détection d'un courant de défaut dudit type de courant de défaut, le dispositif de détection de courant de défaut (22) étant conçu pour la transmission d'un signal de courant de défaut qui indique le courant de défaut à l'unité de commande (18) située du côté du dispositif de charge, l'unité de commande (18) située du côté du dispositif de charge étant conçue pour la modification et/ou l'interruption du signal de communication en fonction du signal de courant de défaut de telle sorte que le dispositif de charge (2) est coupé du réseau de courant alternatif (6) et, pour couper le dispositif de charge (2) du réseau de courant alternatif (6), l'unité de commande (19) située du côté du dispositif de liaison étant conçue pour l'ouverture de l'interrupteur différentiel (8) lorsqu'un signal de communication est absent et/ou est modifié.

2. Système de charge selon la revendication 1, **caractérisé en ce que** le dispositif de détection de courant de défaut (22) est conçu comme un dispositif de surveillance de courant résiduel.

3. Système de charge selon l'une des revendications précédentes, **caractérisé en ce que** le dispositif de détection de courant de défaut (22) est conçu pour la détection de plusieurs types de courant de défaut.

4. Procédé de fonctionnement d'un système de charge (1) selon l'une des revendications précédentes pour une batterie à haute tension (4) d'un véhicule automobile (3), **caractérisé en ce que** l'on mesure un courant de défaut à l'intérieur du dispositif de charge (2) et **en ce que**, en présence d'un courant de défaut non détectable par l'interrupteur différentiel (8), on modifie ou interrompt le signal de communication de telle sorte que le dispositif de charge (2) est coupé du réseau de courant alternatif (6) du côté du dispositif de liaison (7).
